# EUROPEAN PATENT SPECIFICATION

(11) **EP 0 254 888 B1**
(45) Date of publication and mention of the grant of the patent: **05.05.1993**
(21) Application number: 87109397.7
(22) Date of filing: 30.06.1987
(51) Int. Cl.: B65G 1/04

(54) **Procedure in load management, and load management means for applying same**
Verfahren zur Handhabung von Lasten und Mittel zur Durchführung desselben
Procédé pour le maniement de charges et moyen pour la mise en oeuvre de celui-ci

(30) Priority: 30.06.1986 FI 862777
(43) Date of publication of application: 03.02.1988
(73) Proprietor: KONE OY, 05801 Hyvinkää (FI)
(72) Inventor: Pohjonen, Jukka, SF-00240 Helsinki 24 (FI); Heikkilä, Pekka, SF-01600 Vantaa (FI); Tolonen, Jouko, SF-01610 Vantaa (FI)
(74) Representative: Zipse + Habersack

(56) References cited:
- EP-A- 116 126
- DE-A- 2 600 714
- US-A- 3 782 565

## Description

The present invention concerns an apparatus for moving loads according to the preamble of claim 1 and a method for handling this apparatus.

Present practice in load management e.g. in warehouses with shelves is to use load management equipment in which the load is moved onto a shelf, or another storage base, or taken away therefrom, with the aid of telescopic forks that are pushed in under the load or with belt or chain conveyors that are placed under the load. Forks or conveyors entering under the load are embarrassed by the drawback that the shelf has to be made unnecessarily high because an empty space must be left between the shelves and the load to account for load management. Another drawback is slow operation owing to unnecessary motions because the fork or conveyor must enter under the load prior to any load management operation and, finally, the fork or conveyor has to be withdrawn from under the load.

Presently also such equipment is used in load management which grasps a rib or equivalent provided on the end face or side of the load. Hereby unnecessary motions are avoided since the load management means need not enter under the load. There is however the drawback that the manufacturing e.g. of a crate, or box, serving this purpose is inconvenient, owing to the rib or equivalent located outside the crate or box. Moreover, the protruding rib or equivalent is an impediment to the stacking of crates, or boxes, upon each other when empty.

EP-A1-0 116 126 discloses an apparatus of the aforementioned type having electromagnets as engagement members engaging with and end face of a box-shaped load for moving this load on a transporting base. The electromagnets are arranged on an engagement unit which is movable on a rail . For removing a load from storage base the electro-magnets have to engage the end face of the load and have to pull the load by actuating the engagement unit.

The object of the present invention is to provide an apparatus for fast and easy load handling.

In an apparatus of the aforementioned type this object is gained by the characterizing features of claim 1. Advantageous embodiments of the invention are subject matter of the subclaims. A method for handling this apparatus is claimed in claim 6.

According to the invention a suction cup is used for engagement member. When a suction cup is used, it is possible to use for the load e.g. standard storage boxes, since it is possible to use for engagement surface the end or side of the box, where an engagement surface the size of the suction cup is available.

The load is pulled from the storage base onto the transporting base with suction cups by directing the suction cups into contact with the engagement surface, creating a vacuum in the suction cups by the aid of which the suction cups become adherent to the engagement surface, pulling the load with the suction cups from the storage base onto the transporting base, releasing the vacuum in the suction cups, and directing the suction cups out of contact with the engagement surface. Thereafter the load is pushed from the transporting base onto another storage base with suction cups by directing the suction cups into contact with the engagement surface, creating a vacuum in the suction cups, pushing the load with the suction cups from the transporting base onto the storage base, releasing the vacuum in the suction cups, and directing the suction cups out of contact with the engagement surfaces.

According to the invention as transporting base is used a conveyor. By the aid of the conveyor belt or equivalent the load is moved about on the transporting base. The using of a conveyor for transporting base gains space savings in the breadth direction because it is possible with the conveyor to transport the load on the transporting base to its ultimate location and the engagement member need only be employed at the initial phase.

An advantageous embodiment of the invention is also characterized in that the transporting base is placed at somewhat greater height than the storage base when moving a load from the storage base onto the transporting base or from the transporting base onto the storage base, and that when moving a load from the storage base onto the transporting base a pulling and lifting motion combined with the transport motion is employed. Hereby the load management will not be embarrassed by inaccurate positioning because the transporting base may be left either on the same level as the storage base or on a higher level.

The apparatus of the invention, comprises an engagement unit comprising a slide with rails, or equivalent, this slide carrying one or several suction cups for engagement with an engagement surface on the side or end of the load, for pulling the load from the storage base onto the transporting base or for pushing the load from the transporting base onto the storage base, said engagement surface having a size at least equalling the size of the suction cup's engaging surface, and a control unit for controlling the function of the apparatus.

In an advantageous embodiment of the invention the apparatus comprises at least two engagement units.

In an advantageous embodiment of the invention the slide or equivalent carries an even number of suction cups which are located two and two on an axis parallel to the slide's direction of travel, on opposite ends of the slide or equivalent. It is hereby simple to manage, with one and the same means, loads e.g. on both sides of a warehouse lane.

According to an advantageous embodiment of the invention the slide is turnable. Management of loads on both sides of a warehouse lane may also be arranged in this way.

In a further advantageous embodiment of the invention the suction cup is self-positioning, aligning itself with the engagement surface on the load. In this case the suction cup will engage with the engagement surface even if the surface should not be properly aligned with the suction cup.

The apparatus can comprise a control unit which is constituted as logic-operated control unit.

The invention is described in greater detail in the following with the aid of an example, referring to the attached drawing, wherein
Fig. 1 presents a load handling apparatus according to the invention and a storage shelf, with boxes, in elevational view.
Fig. 2 presents a load handling apparatus according to the invention serving storage shelves on both sides of the warehouse lane, in elevational view.
Fig. 3 presents a turnable slide, with suction cups.
Fig. 4a presents two engagement units according to the invention and a storage shelf with boxes, in top view.
Fig. 4b presents two engagement units according to the invention, both moving one and the same box, in top view.

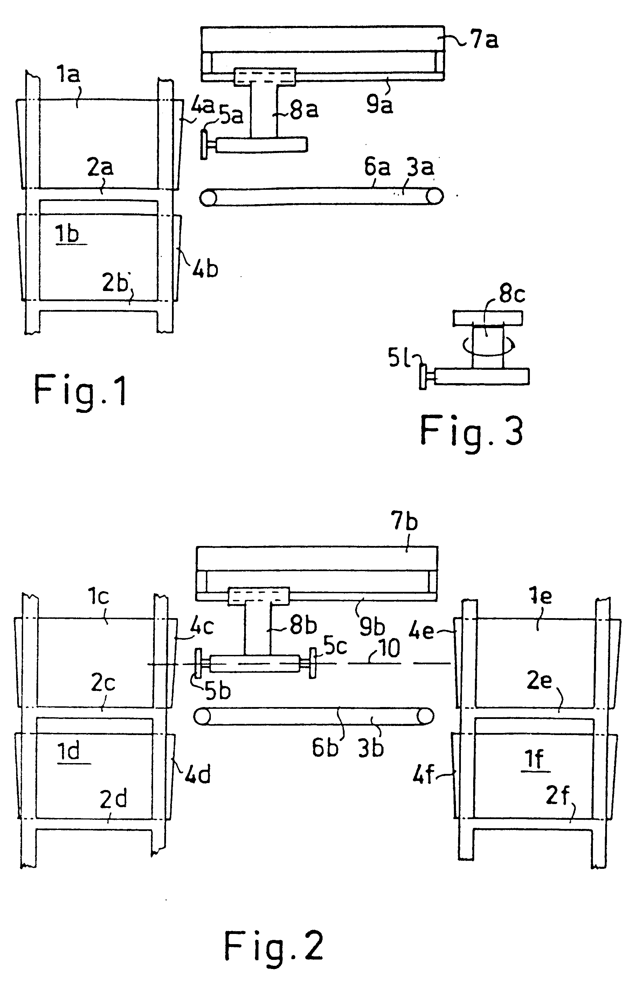

The operation of the load handling apparatus shall first be discussed with reference to Fig. 1. In Fig. 1 is depicted, in elevational view, a load handling apparatus which is in the process of moving a box 1a from the storage shelf onto the conveyor 3a, by means of which the box 1a can be transported to any desired location in the storage area. As taught by the invention, the box 1a is pulled off the shelf 2a onto the belt 6a of the conveyor with the suction cup 5a, which has been mounted on the slide 8a provided in the engagement unit 7a. The slide 8a runs on rails 9a. The engagement unit 7a and conveyor 3a are mounted e.g. on a shelf-set lift, by which they can be moved about and directed in a manner known in itself in the art to come into register with the box 1a. Thereafter, the suction cup 5a is directed with the aid of the slide 8a to contact the box 1a. In the suction cup 5a is created a vacuum in a way known in itself in the art, by the aid of which the suction cup 5a engages with the end face 4a of the box 1a, this end face serving as engagement surface.

Next, the box 1a is pulled off the shelf 2a on to the conveyor 3a. With a view to space economy, the box 1a is not pulled with the suction cup 5a all the way into position in the centre of the conveyor 3a, instead of which the transport to the centre of the conveyor 3a is accomplished with the aid of the conveyor belt 6a and the machinery running this belt 6a. Prior to operating the conveyor 3a, the vacuum of the suction cup 5a has to be released and the suction cup run out of the way of the box 1a, so that the suction cup 1a is only used in the initial phase. Therefore savings can be made in the breadth of the warehouse lane because the required breadth is then only the breadth of the conveyor 6a, not the combined breadth of conveyor 6a and slide 8a.

When transporting a box 1a from the conveyor 6a onto the shelf 2a, the suction cup 5a is first directed into contact with the box 1a and a vacuum is created in the suction cup. The load is thereafter pushed onto the shelf 2a. In order to be able to handle loads in a warehouse lane with smaller width, the box 1a is firstly moved with the aid of the conveyor 6a, whereafter the box 1a is pushed into its ultimate position using the suction cup 5a. The vacuum is thereafter released and the suction cup 5a is moved into another position. Transporting the other box 1b to and from the shelf 2b is accomplished in the same manner by first moving the engagement unit 7a with its slide 8a up to the box 1b and making use of the end face 4b as engagement surface.

When a suction cup 5a is used to move the load, the load may for instance be a common plastic or cardboard box. It is possible with modern suction cups to achieve high degrees of vacuum and therefore no high requirements have to be imposed on the engagement surface of the load. Boxes or crates of which the whole end or side face is not even are also suitable as load objects in the load handling apparatus. There must merely be, on the load, an engagement surface the size of the suction cup on that end or side where the push or pull is applied so that the vacuum will be maintained in the suction cup without leakage. Instead of one single suction cup several suction cups may be used when handling big loads.

If the suction cup 5a is one that aligns itself with the load, the engagement surface 4a and 4b need not be completely consistent with the engaging of the suction cup 5a at the initial phase. A self-aligning suction cup may for instance be constructed with a pivot in the arm of the suction cup 5a. In that case the suction cup 5a will become properly aligned with the engagement surface so that the vacuum required for transport is achievable. It is advantageous in most instances to position the conveyor 3a slightly higher than the shelf 2a and 2b when moving the box 1a and 1b onto the conveyor 3a and onto the shelf 2a and 2b, or vice versa, thereby the box 1a and 1b is easier to move. In this case, as the box 1a and 1b are pulled from the shelf 2a and 2b, and are lifted at the same time with the aid of the suction cup 5a so that the box 1a and 1b do not damage the edge of the conveyor 3a. It is also possible to use another box or crate as storage base. The placing of the box or crate upon another is then facilitated if the transporting base is positioned somewhat higher than the box or crate serving as storage base.

In Fig. 2 is depicted, in elevational view, a load handling apparatus which enables loads to be handled with one means on both sides of the warehouse lane. Moving the boxes 1c-1f in Fig. 2 is accomplished by providing on the slide moving on rails 9b on the engagement unit 7b an even number of suction cups 5b and 5c, these suction cups being located two and two on an axis 10 parallel to the direction of travel of the slide 8b and on opposite ends of the slide 8b so that one suction cup 5b moves boxes 1c and 1d on one side of the lane onto shelves 2c and 2d from the conveyor 3b, which carries a belt 6b, and vice versa, making use of the engagement surfaces 4c and 4d, and the other suction cup 5c moves boxes 1e and 1f on the other side of the lane onto shelves 2e and 2f from the conveyor 3b, and vice versa, making use of the engagement surfaces 4e and 4f. In Fig. 3 is shown another embodiment by which load handling is likewise accomplished on both sides of the lane. In Fig. 3 is depicted a turnable slide 8c with one suction cup 51. The slide 8c may turn for instance with the aid of a pivot in the horizontal plane so that the suction cup 51 is enabled to engage with loads on either side of the lane.

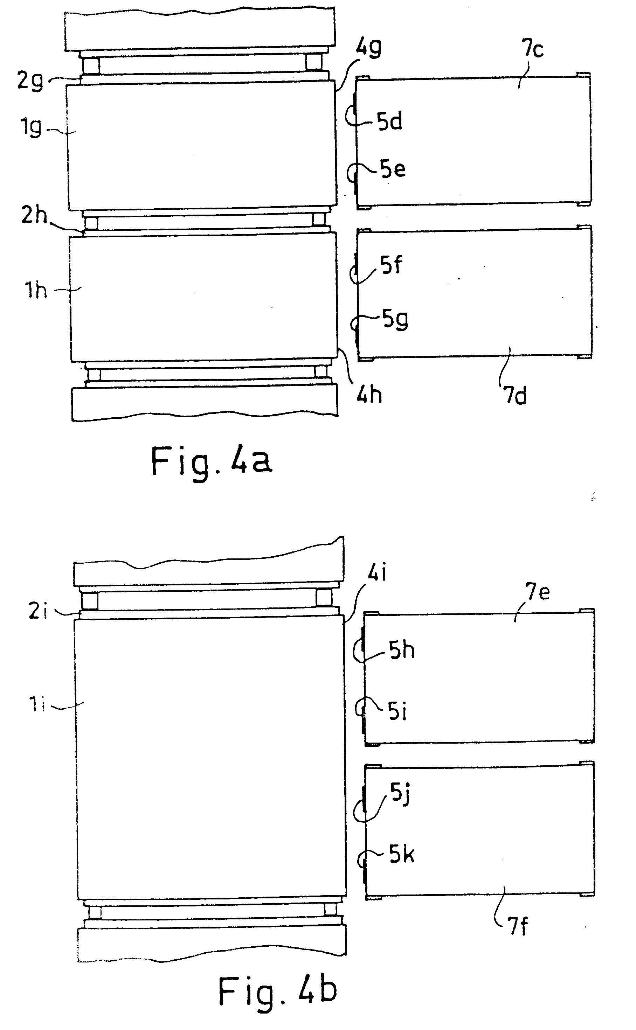

In Figs 4a and 4b is shown, in top view, a load handling apparatus with two load engagement units 7c-7f. In the case of Fig. 4a, two suction cups 5d and 5e of the engagement unit engage with the end 4g of the box 1g, residing on the shelf 2g constituting the storage base, and two suction cups 5f and 5g of the other unit engage with the end 4h of another box 1h, residing on the shelf 2h constituting the storage base. The two suction cups 5h and 5i of the load handling apparatus in Fig. 4b engage with the end 4i of the box 1i on the shelf 2i. In the case of Fig. 4b, the suction cups 5j and 5k engage with the end 4i of the same box 2i. In the case of Fig. 4a one unit moves one box, while in that of Fig. 4b two units move one box 1i. In this way, loads of various sizes may be moved with the same equipment by varying the number of engagement units used for transport.

Control of the load handling apparatus is simply accomplished with the aid of a programmable logics unit. The logics may for instance be employed to create vacuum in the suction cups or to release the vacuum present in the suction cups, at the desired moment.

It is obvious to a person skilled in the art that different embodiments of the invention are not exclusively confined to the example presented in the foregoing and that they may rather vary within the scope of the claims following below.

## Claims

1. An apparatus moving box-shaped loads (1a-1i) from a storage base (2a-2i) to another storage base (2a-2i), comprising
- a transporting base (3a,3b) onto which the load (1a-1i) is shifted from the storage base and transported to the other storage base, said transporting base having a selectively drivable conveyor (6a,6b),
- an engagement unit (7a-7f) having at least one engagement member (5a-5k) engaging an engagement surface (4a-4i) at one end of the load,
rails (9a,9b) supporting a slide (8a-8c) carrying said engagement member (5a-5k)
means for moving the engagement member out of the conveyance direction of the load on the conveyor,
**characterised by**
said rails being arranged above the conveyor (6a,6b),
the transporting base being constituted by a single belt conveyor (6a,6b) and the engagement member being constituted by suction cups (5a-5k).

2. An apparatus according to claim 1, **characterized in that** the slide (8c) is pivotable about an axis perpendicular to the plane of the belt (6a,6b).

3. An apparatus according to claim 1, **characterized in that** the slide (8b) comprises two suction cups (5d,5c) at opposite ends of the slide (8b).

4. An apparatus according to claim 1 or 2, **characterized in that** the slide (8a,8b) comprises two suction cups (5a-5k) directed in the same direction.

5. An apparatus according to anyone of the claims 1 to 4,
**characterized** in that the position of the single belt conveyor (6a,6b) is slightly higher than the position of the storage base (2a-2i).

6. Method for handling box-shaped loads (1a-1i) arranged in shelves by an apparatus according to any one of claims 1 to 5, comprising the steps:
- moving the conveyor (6a,6b) and the engagement unit (7a-7f) to the load (1a-1i) to be handled,
- directing the suction cups of the engagement members (5a-5k) to contact the load (1a-1i),
- creating a vaccum in the suction cups
- pulling the load (1a-1i) off the shelf onto the conveyor (6a,6b) essentially not all the way into the centre of the conveyer (6a,6b),
- releasing the vacuum of the suction cups,
- moving the suction cups out of the travel way of the load (1a-1i),
- activating the conveyor (6a,6b) and conveying the load (1a-1i) into a position in the centre of the conveyor (6a,6b),
- deactivating the conveyor (6a,6b),
- moving the conveyor (6a,6b) and the engagement unit (7a-7f) to a position in the shelf where the load (1a-1i) is desired to be reloaded,
- moving the load (1a-1i) by the conveyor (6a,6b) to said position,
- directing the suction cups to contact the load (1a-1i) positioned on the conveyor (6a,6b),
- creating a vaccum in the suction cups,
- whereafter the load (1a-1i) is pushed into the desired position by the engagement unit (7a-7f),
- releasing the vacuum
- moving the engagement unit (7a-7f) to another position.

7. Method according to claim 6, **characterized by** the use of two engagement units (7a-7f) for handling loads (1a-1i) of various sizes.

## Patentansprüche

1. Vorrichtung zum Bewegen kastenförmiger Lasten (1a bis 1i) von einer Lagerbasis (2a bis 2i) zu einer anderen Lagerbasis (2a bis 2i) mit:
- einer Transportbasis (3a,3b), auf die die Last (1a bis 1i) von der Lagerbasis bewegt und zu der anderen Lagerbasis transportiert wird, wobei die Transportbasis einen wahlweise antreibbaren Förderer (6a, 6b) aufweist;
- eine Eingriffseinheit (7a bis 7f) mit zumindest einem Eingriffsteil (5a bis 5k), das mit einer Eingriffsfläche (4a bis 4i) an einer Stirnseite der Last in Wechselwirkung tritt;
- Schienen (9a, 9b) für einen Schlitten (8a bis 8c), der das Eingriffsteil (5a bis 5k) trägt;
- eine Einrichtung zum Bewegen des Eingriffsteils aus der Förderrichtung der Last auf dem Förderer,
dadurch **gekennzeichnet,**
daß die Schienen über den Förderer (6a, 6b) angeordnet sind, daß die Transportbasis durch einen Einfachbandförderer (6a, 6b) gebildet ist, und
daß das Eingriffsteil durch Ansaugtöpfe (5a bis 5k) gebildet ist.

2. Vorrichtung nach Anspruch 1,
dadurch **gekennzeichnet,**
daß der Schlitten (8c) um eine Achse senkrecht zur Ebene des Bandes (6a, 6b) drehbar ist.

3. Vorrichtung nach Anspruch 1,
dadurch **gekennzeichnet,**
daß der Schlitten (8b) zwei Ansaugtöpfe (5b, 5c) an einander abgewandten Stirnseiten des Schlittens (8b) aufweist.

4. Vorrichtung nach Anspruch 1 oder 2,
dadurch **gekennzeichnet,**
daß der Schlitten (8a, 8b) zwei Ansaugtöpfe (5a bis 5k) aufweist, die in die gleiche Richtung gerichtet sind.

5. Vorrichtung nach einem der Ansprüche 1 bis 4,
dadurch **gekennzeichnet,**
daß die Position des Einfachbandförderers (6a, 6b) etwas höher als die Position der Lagerbasis (2a bis 2i) ist.

6. Verfahren zur Handhabung kistenförmiger in Regalen angeordneter Lasten (1a bis 1i) durch eine Vorrichtung nach einem der Ansprüche 1 bis 5, mit folgenden Verfahrensschritten:
- Bewegen des Förderers (6a, 6b) und der Eingriffseinheit (7a bis 7f) zu der handzuhabenden Last (1a bis 1i),
- Richten der Ansaugtöpfe des Eingriffsteils (5a bis 5k) zum Kontaktieren der Last (1a bis 1i);
- Erzeugen eines Vakuums in den Ansaugtöpfen;
- Ziehen der Last (1a bis 1i) aus dem Regal auf den Förderer (6a, 6b) im wesentlichen nicht den gesamten Weg in das Zentrums des Förderers (6a, 6b);
- Abschalten des Vakuums in den Ansaugtöpfen;
- Bewegen der Ansaugtöpfe aus der Bewegungsrichtung der Last (1a bis 1i);
- Betätigen des Förderers (6a, 6b) und Fördern der Last (1a bis 1i) in eine Position im Zentrum des Förderers (6a, 6b);
- Abschalten des Förderers (6a, 6b);
- Bewegen des Förderers (6a, 6b) und der Eingriffseinheit (7a bis 7f) zu einer Position in dem Regal, an der die Last (1a bis 1i) zurückgeladen werden soll;
- Bewegen der Last (1a bis 1i) durch den Förderer (6a, 6b) in diese Position;
- Richten der Ansaugtöpfe zum Kontaktieren der auf dem Förderer (6a, 6b) angeordneten Last (1a bis 1i);
- Erzeugen eines Vakuums in den Ausaugtöpfen;
- wonach die Last (1a bis 1i) durch die Eingriffseinheit (7a bis 7f) in die gewünschte Position geschoben wird;
- Abschalten des Vakuums und
- Bewegen der Eingriffseinheit (7a bis 7f) in eine andere Position.

7. Verfahren nach Anspruch 6,
**gekennzeichnet** durch
die Verwendung von zwei Eingriffseinheiten (7a bis 7f) zur Handhabung von Lasten (1a bis 1i) unterschiedlicher Größe.

## Revendications

1. Appareil pour déplacer des charges en forme de boîte (1a-1i) d'une base de stockage (2a-2i) à une autre base de stockage (2a-2i), comprenant :
une base de transport (3a,3b) sur laquelle la charge (1a-1i) est transférée à partir de la première base de stockage ettransportée à l'autre base de stockage, ladite base de transport comportant un convoyeur (6a,6b) qui peut être sélectivement entraîné,
une unité de prise (7a-7f) comportant au moins un organe de prise (5a-5k) qui vient en contact avec une surface de prise (4a-4i) située à une extrémité de la charge,
des rails (9a,9b) supportant un coulisseau (8a-8c) qui porte ledit organe de prise (5a-5k), et
des moyens de déplacement de l'organe de prise, hors du chemin de transport de la charge sur le convoyeur, caractérisé en ce que
lesdits rails sont disposés au-dessus du convoyeur (6a,6b), et
la base de transport est constituée par un covoyeur à courroie unique (6a,6b) et l'organe de prise est constitué par des ventouses (5a-5k).

2. Appareil suivant la revendication 1, caractérisé en ce que le coulisseau (8c) peut pivoter autour d'un axe perpendiculaire au plan de la courroie (6a, 6b).

3. Appareil suivant la revendication 1, caractérisé en ce que le coulisseau (8b) comprend deux ventouses (5b,5c) aux extrémités opposées du coulisseau (8b).

4. Appareil suivant la revendication 1 ou 2, caractérisé en ce que le coulisseau (8a,8b) comprend deux ventouses (5a-5k) orientées dans la même direction.

5. Appareil suivant l'une quelconque des revendications 1 à 4,
caractérisé en ce que la position du convoyeur à courroie unique (6a,6b) est légèrement plus haute que la position de la base de stockage (2a-2i).

6. Procédé pour le maniement de charges en forme de boîte (1a-1i) placées sur des étagères, au moyen d'un appareil suivant l'une quelconque des revendications 1 à 5, comprenant les étapes de :
amenée du convoyeur (6a,6b) et de l'unité de prise (7a-7f) à l'endroit de la charge (1a-1i) à manipuler,
amenée des ventouses des organes de prise (5a-5k) en contact avec la charge (1a-1i),
création d'un vide dans les ventouses,
extraction de la charge (1a-1i) hors de l'étagère,sur le convoyeur (6a,6b), sensiblement pas entièrement jusqu'au centre du convoyeur (6a,6b),
purge du vide des ventouses,
déplacement des ventouses hors du chemin de transport de la charge (1a-1i),
activation du convoyeur (6a,6b) et transport de la charge (1a-1i) jusqu'à une position au centre du convoyeur (6a,6b),
désactivation du convoyeur (6a,6b),
déplacement du convoyeur (6a,6b) et de l'unité de prise (7a-7f) jusqu'à une position de l'étagère où on désire replacer la charge (1a-1i),
amenée de la charge (1a-1i) par le convoyeur (6a,6b) à ladite position,
amenée des ventouses en contact avec la charge (1a-1i) placée sur le convoyeur (6a,6b),
création d'un vide dans les ventouses,
ensuite, poussée de la charge (1a-1i) par l'unité de prise (7a-7f) pour l'amener à la position désirée,
purge du vide, et
déplacement de l'unité de prise (7a-7f) à une autre position.

7. Procédé suivant la revendication 6, caractérisé par l'utilisation de deux unités de prise (7a-7f) pour le maniement de charges (1a-1i) de diverses dimensions.
